# EUROPÄISCHE PATENTSCHRIFT

(11) **EP 2 147 530 B1**
(45) Veröffentlichungstag und Bekanntmachung des Hinweises auf die Patenterteilung: **12.06.2013**
(21) Anmeldenummer: 08749812.7
(22) Anmeldetag: 28.04.2008
(51) Int. Cl.: H04L 12/707, H04L 12/723, H04L 12/729, H04L 12/751, H04L 12/803, H04L 12/46

(54) **VERFAHREN ZUM EINRICHTEN EINES LOGISCHEN VERBINDUNGSPFADS IN EINEM VERBINDUNGSORIENTIERTEN PAKETVERMITTELTEN KOMMUNIKATIONSNETZWERK**
METHOD FOR SETTING UP A LOGICAL PATH IN A CONNECTION-ORIENTED PACKET-SWITCHED COMMUNICATION NETWORK
PROCÉDÉ D'ÉTABLISSEMENT D'UN CHEMIN DE LIAISON LOGIQUE DANS UN RÉSEAU DE COMMUNICATION À COMMUTATION DE PAQUETS

(30) Priorität: 15.05.2007 DE 102007022704
(43) Veröffentlichungstag der Anmeldung: 27.01.2010
(73) Patentinhaber: Siemens Aktiengesellschaft, 80333 München (DE)
(72) Erfinder: HOF, Axel, 82140 Olching (Esting) (DE); RIEDL, Johannes, 84030 Ergolding (DE)
(86) Internationale Anmeldenummer: PCT/EP2008/055190
(87) Internationale Veröffentlichungsnummer: WO 2008/138739

(56) Entgegenhaltungen:
- US-B1- 6 577 653
- KRISHNAN R ET AL: "An approach to path-splitting in multipath networks" PROCEEDINGS OF THE INTERNATIONAL CONFERENCE ON COMMUNICATIONS (ICC). GENEVA, MAY 23 - 26, 1993; [PROCEEDINGS OF THE INTERNATIONAL CONFERENCE ON COMMUNICATIONS (ICC)], NEW YORK, IEEE, US, Bd. 3, 23. Mai 1993 (1993-05-23), Seiten 1353-1357, XP010137109 ISBN: 978-0-7803-0950-0

## Beschreibung

Die Erfindung liegt auf dem technischen Gebiet der Kommunikationsnetzwerke und betrifft ein Verfahren zum Einrichten eines logischen Verbindungspfads zwischen einem Startnetzknoten und einem Zielnetzknoten in einem verbindungsorientierten Kommunikationsnetzwerk mit Paketvermittlung. Die Erfindung betrifft weiterhin ein auf dem Verfahren zum Einrichten eines logischen Verbindungspfads basierendes Verfahren zum Übertragen von Datenpaketen zwischen einem Startnetzknoten und einem Zielnetzknoten eines verbindungsorientierten paketvermittelten Kommunikationsnetzwerks. Des Weiteren betrifft sie ein zur Durchführung des Verfahrens geeignetes verbindungsorientiertes paketvermitteltes Kommunikationsnetzwerk.

In verbindungsorientierten Kommunikationsnetzwerken wird vor einer Übertragung von Daten ein permanenter Datenübertragungspfad zwischen einem Start- und einem Zielnetzknoten eingerichtet. Ein wesentlicher Vorteil hierbei liegt in dem kontrollierbaren Verhalten des Netzwerks, da Ressourcen für die Datenübertragungspfade reserviert werden können. Nachteilig ist jedoch, dass Datenübertragungspfade auch dann bereitgehalten werden, wenn keine Daten übermittelt werden.

In paketvermittelten Kommunikationsnetzwerken wird kein Datenübertragungspfad eingerichtet, sondern die zwischen einem Start- und einem Zielnetzknoten zu übertragenden Datenpakete mit der Adresse des Zielnetzknotens versehen und anhand dieser auf einem durch einen geeigneten Algorithmus ermittelten "kürzesten Weg" zum Zielnetzknoten geleitet ("Hop-by-Hop-Routing"). Da in paketvermittelten Netzwerken die zu einem selben Zielnetzknoten zu übertragenden Datenpakete stets denselben Datenübertragungspfad zwischen Start- und Zielnetzknoten nehmen, kann Datenstau entstehen, wenn die Bandbreite des Datenübertragungswegs den Anforderungen nicht genügt.

Um in paketvermittelten Kommunikationsnetzwerken die Vorteile einer verbindungsorientierten Übertragung zu nutzen, ist bekannt, in modernen Kommunikationsnetzwerken hybride Datenübertragungsverfahren einzusetzen, welche eine Kombination aus den verbindungsorientierten und den paketvermittelten Datenübertragungsverfahren darstellen.

Ein Beispiel für ein solches verbindungsorientiertes paketvermitteltes Datenübertragungsverfahren ist MPLS (MPLS = Multiprotocol Label Switching). Entsprechend dem Prinzip der Verbindungsvermittlung basiert MPLS auf dem Mechanismus, dass Datenpakete innerhalb eines autonomen MPLS-Netzwerks nicht mehr anhand der Zieladresse von einem Startnetzknoten zu einem Zielnetzknoten übertragen werden, sondern dass ein virtueller Ende-zu-Ende Datenübertragungspfad ("Tunnel") mit gegebenenfalls reservierter Bandbreite zwischen Start- und Zielnetzknoten dynamisch eingerichtet ("signalisiert") wird, über den dann die Datenpakete gesendet werden. Nach erfolgter Datenübertragung kann der Datenübertragungspfad wieder aufgelöst werden.

Die Datenpakete werden zu diesem Zweck beim Eintritt in das MPLS-Netzwerk mit einem speziellen MPLS-Header ("Shim-Header") versehen, der zwischen dem Layer 2-Header und dem Layer 3-Header (OSI-Modell) eingefügt wird. Der MPLS-Header enthält eine spezielle Kennung (Label), anhand dessen das Datenpaket durch das Netzwerk geleitet wird. Die Label werden mittels Parameter, wie MAC-Adresse, IP-Adresse, Ports von Startnetzknoten und Zielnetzknoten, Datenrate, Delay, und Jitter bestimmt. Eine Zuordnung der Datenpakete zu Label erfolgt innerhalb logischer Klassen, den so genannten Forwarding Equivalence Classes (FEC), wobei die FECs insbesondere festlegen, welche Dienstgüte einem Datenpaket zugeordnet wird. Hierbei ist es möglich, Datenpakete mit gleichem Zielnetzknoten auch verschiedenen FECs zuzuordnen, so dass diese Datenpakete auf verschiedenen Übertragungspfaden zum Zielnetzknoten übertragen werden können. Am Ausgang des MPLS-Netzwerks werden die Label von den Datenpaketen wieder entfernt.

Somit wird innerhalb des MPLS-Netzwerks das bei der Paketvermittlung eingesetzte Hop-by-Hop-Routing auf ein (schnelles) Switching entlang vorgebbarer Datenübertragungspfade zurückgeführt. Insbesondere kann durch die Möglichkeit der Wahl von Datenübertragungspfaden Datenstau vermieden und Dienstgüteanforderungen in einem gewissen Rahmen erfüllt werden.

In MPLS erfolgt eine Übertragung von Datenpaketen über einen logischen Ende-zu-Ende Verbindungspfad zwischen Start- und Zielnetzknoten (LER = Label Edge Router), welcher durch einen dynamisch aufgebauten physikalischen Ende-zu-Ende Datenübertragungspfad ("Tunnel") realisiert wird. Die zwischen Start- und Zielnetzknoten befindlichen Netzknoten werden als LSRs (LSR = Label Switch Router) bezeichnet. Ein Tunnel ist ein aus physikalischen Punkt-zu-Punkt Datenlinks aufgebauter physikalischer Ende-zu-Ende Datenübertragungspfad zur Datenübertragung zwischen Start- und Zielnetzknoten, der durch eine Folge von Label eindeutig festgelegt ist.

Hierbei wird zunächst in einem ersten Schritt mittels eines geeigneten Routing-Algorithmus, wie beispielsweise CSPF (CSPF = Constraint Shortest Path First) ein kostengünstigster Pfad zwischen den LERs ermittelt, wobei neben den Pfadkosten auch Verbindungs- und Netzknoteneigenschaften, wie Bandbreite (Bitrate), Delay und Jitter berücksichtigt werden. So ermittelt CSPF zunächst alle Pfade mit geringsten Kosten zwischen den beiden LERs, wählt hieraus jene Pfade mit der höchsten Bandbreite, wählt hieraus jene Pfade mit dem geringsten Hop-Count, d. h. der geringsten Anzahl von LSRs zwischen den beiden LERs, und wählt anschließend aus den verbleibenden Pfaden einen Pfad zufällig aus.

Über im Routing-Algorithmus implementierte IGPs (IGP = Interior Gateway Protocol), wie IS-IS (IS-IS = Intermediate System to Intermediate System Protocol) oder OSPF (OSPF = Open Shortest Path First), ist ein Nachrichtenaustausch zwischen den Netzknoten sichergestellt, so dass sich die Netzknoten "sehen" können und stets über die Übertragungseigenschaften, insbesondere die im Netzwerk verfügbaren Bandbreiten, informiert sind.

Anschließend wird mittels eines geeigneten Signalisierungsprotokolls in einem zweiten Schritt eine Nachricht PATH vom eingangsseitigen LER an den benachbarten LSR im ermittelten Datenübertragungspfad gesendet, von diesem mit einem so genannten LABEL-REQUEST ergänzt und an den nächsten Netzknoten im Datenübertragungspfad gesendet. Dies wiederholt sich solange, bis die Nachricht den ausgangsseitigen LER erreicht hat.

Der ausgangsseitige LER liest die Nachricht PATH und leitet in einem dritten Schritt eine Reservierung der Ressourcen ein, indem er ein Label vergibt, eine Nachricht RESV erzeugt und diese über den gleichen Datenübertragungspfad in umgekehrter Richtung an seinen unmittelbar benachbarten Netzknoten (LSR) sendet. Dieser Netzknoten liest die Nachricht RESV, speichert das vom ausgangsseitigen LER vergebene Label in seiner Weiterleitungstabelle, wählt ein anderes Label aus, ersetzt das bisherige Label in der RESV durch das neue Label und sendet eine modifizierte Nachricht RESV an den nächsten Netzknoten im Übertragungspfad in Richtung des eingangsseitigen LER. Dies wird solange wiederholt bis die Nachricht RESV den eingangsseitigen LER erreicht, wodurch eine Folge von Label für einen bestimmten Übertragungspfad mit bestimmten Übertragungseigenschaften (FEC) erzeugt wird.

Mithilfe des Signalisierungsprotokolls wird somit zwischen je zwei benachbarten Netzknoten innerhalb eines vorher ermittelten Datenübertragungspfads ein Label in der Weise vereinbart, dass benachbarte Netzknoten jeweils einen gleichen Labelwert in ihren Weiterleitungstabellen halten. Auf diese Weise bestimmt ein gleicher Labelwert einen virtuellen Punkt-zu-Punkt Datenlink zwischen den Ports zweier benachbarter Netzknoten innerhalb des virtuellen Datenübertragungspfads.

Als Signalisierungsprotokoll wird meist RSVP-TE (RSVP-TE = Resource Reservation Protocol for Traffic Engineering) eingesetzt, ein Protokoll, das insbesondere die Möglichkeiten der Reservierung von Ressourcen und der Steuerung von Datenströmen anhand der Labelzuordnung bietet.

Empfängt der eingangsseitiger LER Datenpakete, werden diese Datenpakete anhand von Paketeigenschaften bestimmten FECs zugeordnet und mit einem Label gekennzeichnet ("Push"). Alle zu einer selben FEC gehörenden Datenpakete werden dabei mit demselben Label gekennzeichnet. Anschließend werden die Datenpakete zum nächsten Netzknoten im Datenübertragungspfad gesendet. Der empfangende Netzknoten identifiziert die zu einer FEC gehörenden Datenpakete anhand der Label, ändert die Label mittels der Weiterleitungstabelle ("Swap"), und sendet die Datenpakete an seinen entsprechenden Ausgangsport. Dies wird im Übertragungspfad solange wiederholt, bis die Datenpakete den ausgangsseitigen LER erreicht haben, wo die Label wieder entfernt werden ("Pop"). Durch diese Folge von einer bestimmten FEC zugeordneten Labels ("Verkettung") wird ein Tunnel zur Übertragung des einer FEC zugeordneten Datenpakets eindeutig definiert. Die Zuordnung der Labels zu bestimmten FECs legt für einen bestimmten Übertragungspfad dessen Übertragungseigenschaften fest.

Ein wesentlicher Vorteil der anhand von MPLS beispielhaft aufgezeigten hybriden Datenübertragungsverfahren liegt in der Möglichkeit der gezielten Wahl eines Datenübertragungspfads für den Datenverkehr im Netzwerk, so dass insbesondere breitbandige und verzögerungsarme Datenwege für eine Datenübertragung zur Verfügung gestellt werden können. Nachteilig ist jedoch, dass beim Erhalt einer Bandbreitenanforderung am Startnetzknoten ein entsprechender physikalischer Datenübertragungspfad im Netzwerk nur dann eingerichtet werden kann, wenn die Bandbreitenanforderung auf Basis der im Netzwerk vorhandenen Bandbreiten überhaupt erfüllt werden kann. Kann die Bandbreitenanforderung nicht erfüllt werden, weil beispielsweise bereits für andere physikalische Datenübertragungspfade Bandbreiten reserviert sind, wird kein physikalischer Datenübertragungspfad aufgebaut und eine entsprechende Fehlermeldung ausgegeben. Da die vom Netzwerk zur Verfügung gestellten Bandbreiten mit zunehmendem Datenverkehr im Netzwerk geringer werden, nimmt die Wahrscheinlichkeit für eine nicht erfüllbare Bandbreitenanforderung im Netzwerk mit zunehmenden Datenaufkommen zu, so dass eine zugesicherte Dienstgüte (QoS = Quality of Service) unter Umständen nicht eingehalten werden kann.

Die Druckschrift US 6,577,653 B1 beschreibt ein Verfahren zum Einrichten einer Verbindung zwischen einem Quellknoten und einem Zielknoten in einem ATM-Netzwerk, wobei zur Datenübertragung mehrere Pfade in Abhängigkeit von einer geforderten Bandbreite parallel genutzt werden.

Die Aufgabe der vorliegenden Erfindung besteht darin, ein Verfahren zum Einrichten eines logischen Verbindungspfads zwischen einem Startnetzknoten und einem Zielnetzknoten in einem verbindungsorientierten paketvermittelten Kommunikationsnetzwerk zur Verfügung zu stellen, mit dem die obig aufgezeigten Nachteile vermieden werden können.

Diese Aufgabe wird erfindungsgemäß durch ein Verfahren zum Einrichten eines logischen Verbindungspfads zwischen einem Startnetzknoten und einem Zielnetzknoten in einem verbindungsorientierten paketvermittelten Kommunikationsnetzwerk mit den Merkmalen von Patentanspruch 1 gelöst. Vorteilhafte Ausgestaltungen der Erfindung sind durch die Merkmale der Unteransprüche angegeben.

Erfindungsgemäß ist ein Verfahren zum Einrichten eines logischen Ende-zu-Ende Verbindungspfads mit einer wählbaren ersten Bandbreite von einem Startnetzknoten zu einem Zielnetzknoten in einem verbindungsorientierten paketvermittelten Kommunikationsnetzwerk gezeigt. Wie eingangs erläutert, handelt es sich bei dem Kommunikationsnetzwerk um ein Netzwerk, in dem eine Datenübertragung mittels eines hybriden Datenübertragungsverfahrens erfolgt, das eine Kombination aus einem verbindungsorientierten und einem paketvermittelten Datenübertragungsverfahren darstellt. Mithilfe des Datenübertragungsverfahrens werden zur Realisierung des logischen Ende-zu-Ende Verbindungspfads, vor einer Übertragung von Datenpaketen von einem Startnetzknoten zu einem Zielnetzknoten, (virtuelle) physikalische Ende-zu-Ende Datenübertragungspfade zur Datenübertragung vom Startnetzknoten zum Zielnetzknoten dynamisch aufgebaut, welche nach erfolgter Datenübertragung wieder abgebaut werden können. Das hybride Datenübertragungsverfahren zur Steuerung der Datenübertragung im Kommunikationsnetzwerk kann dezentral in elektronischen Datenverarbeitungseinrichtungen der Netzknoten ausgeführt werden, jedoch ist es gleichermaßen möglich, dass das Datenübertragungsverfahren in einer mit den Netzknoten datentechnisch verbundenen, zur elektronischen Datenverarbeitung geeigneten, zentralen Netzwerkmanagementeinrichtung ausgeführt wird.

Erfindungsgemäß wird ein logischer Ende-zu-Ende Verbindungspfad mit einer wählbaren ersten Bandbreite von einem Startnetzknoten zu einem Zielnetzknoten im verbindungsorientierten paketvermittelten Kommunikationsnetzwerk eingerichtet. Als "logischer Ende-zu-Ende Verbindungspfad" wird hier um im Weiteren eine Verbindung zwischen Start- und Zielnetzknoten verstanden, die durch verschiedene physikalische Ende-zu-Ende Datenübertragungspfade (Tunnel) vom Startnetzknoten zum Zielnetzknoten, die tatsächlich für die Übertragung der Datenpakete eingesetzt werden, realisiert werden kann. Dementsprechend gibt ein logischer Verbindungspfad lediglich die Verbindung von Datenpaketen von Startnetzknoten zum Zielnetzknoten mit einer wählbaren ersten Bandbreite an, ohne hierbei die für die Übertragung der Datenpakete tatsächlich genutzten physikalischen Punkt-zu-Punkt Datenlinks bzw. die aus den physikalischen Punkt-zu-Punkt Datenlinks aufgebauten physikalischen Ende-zu-Ende Datenübertragungspfade festzulegen. Um einen logischen Verbindungspfad einzurichten, ist es somit erforderlich, wenigstens einen, den logischen Verbindungspfad realisierenden, physikalischen Datenübertragungspfad einzurichten ("signalisieren"), wobei jeweilige Bandbreiten für die den physikalischen Ende-zu-Ende Datenübertragungspfad aufbauenden physikalischen Punkt-zu-Punkt Datenlinks reserviert werden.

Das erfindungsgemäße Verfahren zum Einrichten eines logischen Ende-zu-Ende Verbindungspfads mit einer wählbaren ersten Bandbreite von einem Startnetzknoten zu einem Zielnetzknoten in einem verbindungsorientierten paketvermittelten Kommunikationsnetzwerk umfasst die folgenden sukzessiven Schritte:
Auf Basis einer Anforderung eines logischen Verbindungspfads mit einer bestimmten wählbaren (ersten) Bandbreite von einem Startnetzknoten zu einem Zielnetzknoten im verbindungsorientierten paketvermittelten Kommunikationsnetzwerk erfolgt zunächst eine Ermittlung einer Mehrzahl von physikalischen Ende-zu-Ende Datenübertragungspfaden (Tunnel) vom Startnetzknoten zum Zielnetzknoten mit den jeweils verfügbaren (zweiten) Bandbreiten zur Realisierung des einzurichtenden logischen Verbindungspfads. Die Bestimmung der physikalischen Ende-zu-Ende Datenübertragungspfade vom Startnetzknoten zum Zielnetzknoten erfolgt mittels eines geeigneten Routing-Algorithmus, beispielsweise auf Basis von CSPF (CSPF = Constraint Shortest Path First), welcher Pfade vom Startnetzknoten zum Zielnetzknoten unter Berücksichtigung von Pfadkosten und Bandbreiten ermitteln kann. Durch ein im Routing-Algorithmus implementiertes IGP (IGP = Interior Gateway Protocol), wie beispielsweise IS-IS (IS-IS = Intermediate System to Intermediate System Protocol) oder OSPF (OSPF = Open Shortest Path First), ist ein Nachrichtenaustausch zwischen den Netzknoten sichergestellt, so dass sich die Netzknoten "sehen" können und stets über die Übertragungseigenschaften, insbesondere die im Netzwerk verfügbaren Bandbreiten, informiert sind. Die maximal verfügbare Bandbreite eines physikalischen Ende-zu-Ende Datenübertragungspfads ergibt sich aus der kleinsten Bandbreite der den physikalischen Ende-zu-Ende Datenübertragungspfad aufbauenden physikalischen Punkt-zu-Punkt Datenlinks zwischen je zwei benachbarten Netzknoten.

Anschließend erfolgt eine Auswahl eines oder mehrerer der ermittelten physikalischen Ende-zu-Ende Datenübertragungspfade unter der Bedingung, dass die Summe der zweiten Bandbreiten der physikalischen Datenübertragungspfade wenigstens so groß ist wie die wählbare erste Bandbreite des logischen Verbindungspfads.

Daraufhin erfolgt ein Signalisieren (Einrichten) des einen oder der mehreren ausgewählten physikalischen Datenübertragungspfade, wobei Bandbreiten für die die physikalischen Datenübertragungspfade aufbauenden Punkt-zu-Punkt Datenlinks reserviert werden, wodurch der logische Verbindungspfad eingerichtet wird. Eine Signalisierung der Datenübertragungspfade erfolgt durch ein geeignetes Signalisierungsprotokoll, wie beispielsweise RSVP-TE (RSVP-TE = Resource Reservation Protocol for Traffic Engineering). Hierdurch können virtuelle physikalische Datenübertragungspfade in Form von Label Switched Paths (LSPs) eingerichtet werden, die durch eine verkettete Folge von Label mit reservierten Bandbreiten eingerichtet werden können. Jeweils zwei benachbarte Netzknoten des LSP halten hierbei ein Label mit einem gleichen Wert.

Im erfindungsgemäßen Verfahren wird die geforderte erste Bandbreite des logischen Verbindungspfads durch einen wählbaren Teiler geteilt, was als Ergebnis zu einer dritten Bandbreite führt. Anschließend wird eine dem Betrag des Teilers entsprechende Anzahl von physikalischen Datenübertragungspfaden gewählt, und zwar unter der Bedingung, dass deren zweiten Bandbreiten wenigstens der dritten Bandbreite entsprechen. Das erfindungsgemäße Verfahren ermöglicht in besonders einfacher Weise eine Auswahl der physikalischen Datenübertragungspfade

Durch das erfindungsgemäße Verfahren können in vorteilhafter Weise für einen selben logischen Verbindungspfad zwischen Start- und Zielnetzknoten mehrere physikalische Datenübertragungspfade (Tunnel) vom Startnetzknoten zum Zielnetzknoten signalisiert werden, um hierdurch eine geforderte Bandbreite zur Datenübertragung zwischen Start- und Zielnetzknoten zu erfüllen, welche durch lediglich einen einzigen physikalischen Datenübertragungspfad nicht erfüllt werden könnte. Im Unterschied zu den herkömmlichen hybriden Datenübertragungsverfahren wie MPLS kann somit ein logischer Verbindungspfad selbst dann eingerichtet werden, wenn kein physikalischer Datenübertragungspfad für sich allein die geforderte Bandbreite erfüllt.

Die Erfindung betrifft weiterhin ein Verfahren zum Übertragen von Datenpaketen von einem Startnetzknoten zu einem Zielnetzknoten in einem verbindungsorientierten paketvermittelten Kommunikationsnetzwerk, bei welchem auf Basis einer Anforderung eines logischen Verbindungspfads von einem Startnetzknoten zu einem Zielnetzknoten im verbindungsorientierten paketvermittelten Kommunikationsnetzwerk zunächst ein logischer Ende-zu-Ende Verbindungspfad vom Startnetzknoten zum Zielnetzknoten gemäß dem oben beschriebenen Verfahren eingerichtet wird. Anschließend erfolgt eine Verteilung der zu übertragenden Datenpakete vom Startnetzknoten auf die signalisierten physikalischen Datenübertragungspfade entsprechend den zweiten Bandbreiten und eine Weiterleitung der Datenpakete zum Zielnetzknoten. Eine Verteilung der Datenpakete auf die signalisierten Datenübertragungspfade erfolgt mittels eines an sich bekannten Lastverteilungsalgorithmus (Scatter-Algorithmus). Sind die physikalischen Datenübertragungspfade beispielsweise in Form von LSPs eingerichtet, kann eine Verteilung der Datenpakete durch Versehen der Datenpakete mit einem entsprechenden Label erfolgen. Durch das Verfahren zum Übertragen von Datenpaketen von einem Startnetzknoten zu einem Zielnetzknoten können in vorteilhafter Weise Datenpakete über einen logischen Verbindungspfad zwischen Start- und Zielnetzknoten selbst dann zum Zielnetzknoten übertragen werden, wenn die Bandbreitenanforderung zur Übertragung der Datenpakete durch keinen physikalischen Datenübertragungspfad alleine erfüllt werden kann.

Bei einer vorteilhaften Ausgestaltung des Verfahrens zum Übertragen von Datenpaketen von einem Startnetzknoten zu einem Zielnetzknoten in einem verbindungsorientierten paketvermittelten Kommunikationsnetzwerk über einen eingerichteten logischen Verbindungspfad erfolgt eine Verteilung der Datenpakete auf die signalisierten physikalischen Datenübertragungspfade mittels eines Hash-Algorithmus. Hierdurch kann in vorteilhafter Weise eine Vertauschung von Datenpaketen vermieden werden.

Die Erfindung erstreckt sich weiterhin auf ein verbindungsorientiertes paketvermitteltes Kommunikationsnetzwerk mit einer Mehrzahl über Punkt-zu-Punkt Datenlinks miteinander verbundene Netzknoten, welche so eingerichtet sind, dass sie ein wie oben beschriebenes Verfahren ausführen können.

Darüber hinaus erstreckt sich die Erfindung auf einen maschinenlesbaren Programmcode für einen Netzknoten eines wie oben beschriebenen verbindungsorientierten paketvermittelten Kommunikationsnetzwerks, der Steuerbefehle enthält, die den Netzknoten zur Durchführung eines wie oben beschriebenen Verfahren veranlassen.

Des Weiteren erstreckt sich die Erfindung auf einen Netzknoten eines verbindungsorientierten paketvermittelten Kommunikationsnetzwerks, auf dem ein wie oben beschriebener maschinenlesbarer Programmcode ausgeführt wird.

Weiterhin erstreckt sich die Erfindung auf ein Speichermedium mit einem darauf gespeicherten, wie oben beschriebenen, maschinenlesbaren Programmcode.

Die Erfindung wird nun anhand eines Ausführungsbeispiels näher erläutert, wobei Bezug auf die beigefügten Zeichnungen genommen wird. Es zeigen:
- Fig. 1: in schematischer Weise ein Ausführungsbeispiel des erfindungsgemäßen Kommunikationsnetzwerks mit den auf den jeweiligen Datenlinks verfügbaren Bandbreiten;
- Fig. 2: in schematischer Weise das Kommunikationsnetzwerk von Fig. 1 mit signalisierten physikalischen Datenübertragungspfaden zur Realisierung eines logischen Verbindungspfads zwischen Netzknoten N1 und Netzknoten N6.

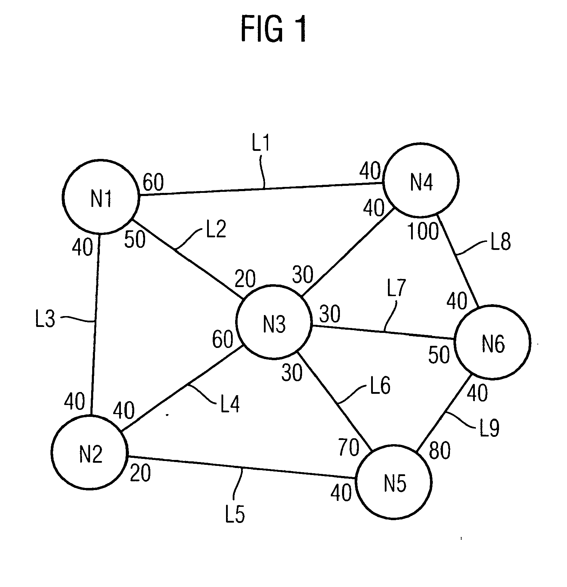

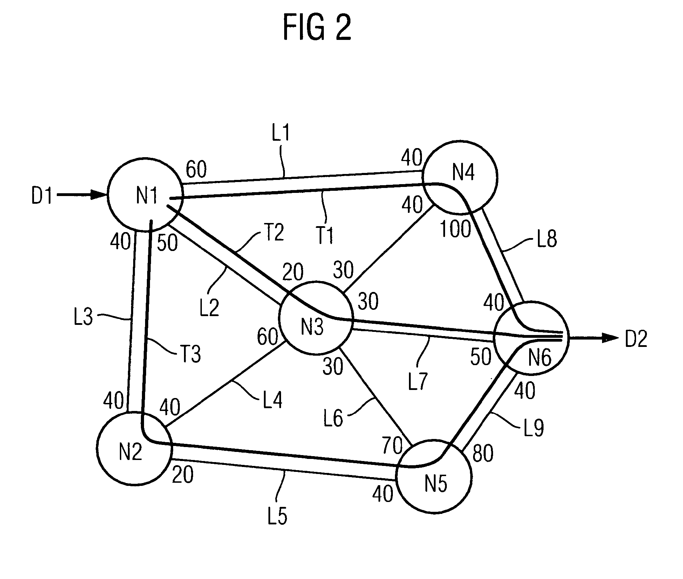

In den Fig. 1 und 2 ist ein Ausführungsbeispiel des erfindungsgemäßen verbindungsorientierten paketvermittelten Kommunikationsnetzwerks gezeigt. Das autonome Kommunikationsnetzwerk umfasst eine Mehrzahl - hier beispielhaft sechs - Netzknoten N1-N6, die über physikalische Punkt-zu-Punkt Datenlinks L1-L9 maschenförmig miteinander verbunden sind. Zudem sind die zu einem bestimmten Zeitpunkt verfügbaren Bandbreiten auf dem jeweils ausgehenden Datenlink der Netzknoten N1-N6 angegeben.

So ist beispielsweise der Netzknoten N1 über einen physikalischen Datenlink L1 mit dem Netzknoten N4 datentechnisch verbunden, wobei der Netzknoten N1 für den ausgehenden Datenlink L1 eine Bandbreite von 60 Mbps und der Netzknoten N4 für den ausgehenden Datenlink L1 eine Bandbreite von 40 Mbps zur Verfügung stellen. Der Netzknoten N1 ist weiterhin über einen physikalischen Datenlink L2 und einen physikalischen Datenlink L3 mit dem Netzknoten N3 bzw. den Netzknoten N2 datentechnisch verbunden, wobei der Netzknoten N1 bezüglich des ausgehenden Datenlinks L2 eine Bandbreite von 50 Mbps und bezüglich des ausgehenden Datenlinks L3 eine Bandbreite von 40 Mbps zur Verfügung stellt. Der Netzknoten N3 stellt für den ausgehenden Datenlink L2 eine Bandbreite von 20 Mbps zur Verfügung, der Netzknoten N2 stellt für den ausgehenden Datenlink L3 eine Bandbreite von 40 Mbps bereit. Alle weiteren Angaben zu den Bandbreiten in den Figuren sind in analoger Weise zu verstehen.

In dem Kommunikationsnetzwerk ist ein hybrides Datenübertragungsverfahren in den Netzknoten N1-N6 eingerichtet, durch welches zur Realisierung eines logischen Ende-zu-Ende Verbindungspfads vor einer Übertragung von Datenpaketen von einem Startnetzknoten zu einem Zielnetzknoten, virtuelle physikalische Ende-zu-Ende Datenübertragungspfade zur Datenübertragung vom Startnetzknoten zum Zielnetzknoten dynamisch aufgebaut werden können, welche nach erfolgter Datenübertragung wieder abgebaut werden können.

Das Datenübertragungsverfahren ist in der Lage, durch Signalisieren eines oder mehrerer physikalischer Datenübertragungspfade einen logischen Verbindungspfad zwischen einen Startnetzknoten und einem Zielnetzknoten einzurichten.

Zu diesem Zweck ist im Kommunikationsnetzwerk in den Netzknoten N1-N6 ein Routing-Algorithmus implementiert, durch den zur Realisierung eines logischen Ende-zu-Ende Verbindungspfads mit einer bestimmten (wählbaren) Bandbreite zwischen einem Startnetzknoten und einem Zielnetzknoten physikalische Ende-zu-Ende Datenübertragungspfade vom Startnetzknoten zum Zielnetzknoten unter Berücksichtigung von Pfadkosten und der verfügbaren Bandbreiten der Datenlinks ermittelt werden können. Ein solcher Routing-Algorithmus basiert beispielsweise auf CSPF. Durch ein im Routing-Algorithmus implementiertes IGP, wie beispielsweise IS-IS oder OSPF, ist ein Nachrichtenaustausch zwischen den Netzknoten N1-N6 sichergestellt, so dass die Netzknoten N1-N6 zu jeder Zeit über die im Kommunikationsnetzwerk verfügbaren Bandbreiten der Datenlinks informiert sind.

Das hybride Datenübertragungsverfahren ist weiterhin in der Lage, einen oder mehrere der ermittelten physikalischen Ende-zu-Ende Datenübertragungspfade unter der Bedingung, dass die Summe derer Bandbreiten wenigstens so groß ist wie die Bandbreite des logischen Verbindungspfads, auszuwählen.

Weiterhin ist in den Netzknoten N1-N6 ein Signalisierungsprotokoll in Form von RSVP-TE implementiert, welches das Einrichten (Signalisieren) eines physikalischen Datenübertragungspfads in Form eines Label Switched Path (LSP) und die Reservierung von Bandbreiten hierfür ermöglicht.

Des Weiteren kann das hybride Datenübertragungsverfahren die zu übertragenden Datenpakete einer logische Klasse (FEC) zuordnen, mit einem Label versehen und auf die signalisierten LSPs verteilen. Zu diesem Zweck ist in dem Datenübertragungsverfahren ein Lastverteilungsalgorithmus (Scatter-Algorithmus), beispielsweise ein Hash-Algorithmus, implementiert. Die zwischen einem Start- und einem Zielnetzknoten liegenden Netznoten eines selben physikalischen Datenübertragungspfads sind in der Lage, empfangene Datenpakete anhand des Labels zum Zielnetzknoten weiterzuleiten. Der Ziel-Netzknoten kann das Label wieder entfernen.

In Fig. 2 ist eine beispielhafte Ausführungsform eines Verfahrens zur Übertragung von Datenpaketen entlang eines durch mehrere physikalische Datenübertragungspfade realisierten logischen Verbindungspfads veranschaulicht.

Netzknoten N1 empfängt als Startnetzknoten einen Datenstrom D1, der mit einer Bandbreitenreservierung von 100 Mbps zum Netzknoten N6 als Zielnetzknoten übertragen werden soll. Somit soll zwischen dem Netzknoten N1 und dem Netzknoten N6 ein logischer Verbindungspfad mit einer Bandbreite von 100 Mbps eingerichtet werden.

Auf Basis der Verbindungsanforderung ermittelt der Netzknoten N1 zunächst mögliche physikalische Datenübertragungspfade (Tunnel) und deren Bandbreiten zur Realisierung des logischen Verbindungspfads zwischen dem Netzknoten N1 und dem Netzknoten N6. Aufgrund des im Kommunikationsnetzwerk ausgeführten Routing-Algorithmus "kennt" der Netzknoten N1 die Topologie des Netzwerks und die zu diesem Zeitpunkt verfügbaren Bandbreiten aller ausgehenden Datenlinks.

Der Netzknoten N1 ermittelt hier beispielsweise drei Tunnel T1-T3. Der erste Tunnel T1 besteht aus den virtuellen Datenlinks L1 und L8 und verknüpft Netzknoten N1 und Netzknoten N6 unter Zwischenschaltung von Netzknoten N4. Für den ausgehenden Datenlink L1 des ersten Tunnels T1 stellt Netzknoten N1 eine Bandbreite von 60 Mbs zur Verfügung und Netzknoten N4 stellt für den ausgehenden Datenlink L8 des ersten Tunnels T1 eine Bandbreite von 100 Mbs zur Verfügung. Insofern kann der erste Tunnel T1 eine maximale Bandbreite von 60 Mbps zur Verfügung stellen. Der zweite Tunnel T2 besteht aus den virtuellen Datenlinks L2 und L7 und verknüpft Netzknoten N1 und Netzknoten N6 unter Zwischenschaltung von Netzknoten N3. Für den ausgehenden Datenlink L2 des zweiten Tunnels T2 stellt Netzknoten N1 eine Bandbreite von 50 Mbps zur Verfügung und Netzknoten N3 stellt für den ausgehenden Datenlink L7 des zweiten Tunnels T2 eine Bandbreite von 30 Mbps zur Verfügung. Insofern kann der zweite Tunnel T2 eine maximale Bandbreite von 30 Mbps zur Verfügung stellen. Der dritte Tunnel T3 besteht aus den virtuellen Datenlinks L3, L5 und L9 und verknüpft Netzknoten N1 und Netzknoten N6 unter Zwischenschaltung der Netzknoten N2 und N5. Für den ausgehenden Datenlink L3 des dritten Tunnels T3 stellt Netzknoten N1 eine Bandbreite von 40 Mbps zur Verfügung, Netzknoten N2 stellt für den ausgehenden Datenlink L5 des dritten Tunnels T3 eine Bandbreite von 20 Mbps zur Verfügung und Netzknoten N5 stellt für den ausgehenden Datenlink L9 des dritten Tunnels T3 eine Bandbreite von 80 Mbps zur Verfügung. Insofern kann der dritte Tunnel T3 eine maximale Bandbreite von 20 Mbps zur Verfügung stellen.

Netzknoten N1 erfasst die maximal verfügbaren Bandbreiten der jeweilig ermittelten Tunnel T1-T3 und erkennt, dass die Bandbreitenanforderung für den Datenstrom D1 nicht durch einen einzigen Tunnel realisiert werden kann, da lediglich eine maximale Bandbreitenreservierung von 60 Mbps für Tunnel T1 möglich ist.

Netzknoten N1 wählt in einem nicht zur Erfindung gehörigen Ausführungsbeispiel die ermittelten Tunnel auf Basis der maximal verfügbaren Bandbreiten unter Bedingung aus, dass die Summe der maximal verfügbaren Bandbreiten der gewählten Tunnel wenigstens der angeforderten Bandbreite von 100 Mbps entspricht. In diesem Ausführungsbeispiel wählt Netzknoten N1 die ermittelten Tunnel sukzessiv nach jeweils höchster maximal verfügbarer Bandbreite aus. Somit wird zunächst Tunnel T1 mit einer maximal verfügbaren Bandbreite von 60 Mbps ausgewählt. Netzknoten N1 stellt anschließend fest, dass noch eine restliche Bandbreite von 40 Mbps mittels weiterer Tunnel zu reservieren ist. Netzknoten N1 wählt auf Basis der maximal verfügbaren Bandbreite anschließend Tunnel T2 mit einer maximal verfügbaren Bandbreite von 30 Mbps aus. Netzknoten N1 stellt anschließend fest, dass noch eine restliche Bandbreite von 10 Mbps mittels weiterer Tunnel zu reservieren ist. Netzknoten N1 wählt auf Basis der maximal verfügbaren Bandbreite anschließend Tunnel T3 mit einer maximal verfügbaren Bandbreite von 20 Mbps aus. Durch die Wahl der drei Tunnel T1-T3 kann in Summe die geforderte Bandbreite von 100 Mbps für den Datenstrom D1 sichergestellt werden.

Daraufhin erfolgt eine Signalisierung der ausgewählten Tunnel T1-T3 mittels des Signalisierungsprotokolls in Form herkömmlicher Label Switched Paths (LSPs), auf denen jeweils die verfügbaren Bandbreiten der Datenlinks reserviert werden.

Zur Signalisierung von Tunnel T1 sendet der Netzknoten N1 eine Nachricht PATH an den benachbarten Netzknoten N4 auf dem Datenlink L1. Von diesem wird die Nachricht PATH mit einem LABEL-REQUEST ergänzt und an den Netzknoten N6 über den Datenlink L8 gesendet. Der Netzknoten N6 liest die Nachricht PATH, vergibt ein Label, erzeugt eine mit dem Label versehene Nachricht RESV und sendet diese über den Datenlink L8 an den Netzknoten N4. Der Netzknoten N4 liest diese Nachricht RESV, speichert das enthaltene Label in seiner Weiterleitungstabelle, wählt ein anderes Label aus, ersetzt das bisherige Label in der Nachricht RESV und sendet die modifizierte Nachricht RESV an den Netzknoten N1. Netzknoten N1 empfängt die Nachricht RESV und speichert das enthaltene Label in seiner Weiterleitungstabelle. Somit werden durch ein jeweils gleiches Label in den Netzknoten N1 und N4 ein virtueller Datenlink L1, und durch ein jeweils gleiches Label in den Netzknoten N4 und N6 ein virtueller Datenlink L8 eindeutig definiert. Durch die verkettete Folge der Label wird der erste Tunnel T1 definiert. Die entsprechenden Bandbreiten der Datenlinks werden reserviert. Der zweite Tunnel T2 und der dritte Tunnel T3 werden jeweils in analoger Weise signalisiert.

Die im Datenstrom D1 enthaltenen Datenpakete werden vom Netzknoten N1 auf die verschiedenen Tunnel T1-T3 entsprechend der verfügbaren maximalen Bandbreiten verteilt. Zu diesem Zweck werden die von Netzknoten N1 empfangenen Datenpakete im Push-Verfahren mit einem Label gekennzeichnet, wobei durch die Wahl des Labels der für die Übertragung des Datenpakets zu benutzende Tunnel vorgegeben wird. Innerhalb der jeweiligen Tunnel werden die Datenpakete im Swap-Verfahren weitergeleitet bis sie den Netzknoten N6 erreichen. Im Netzknoten N6 werden die Label von den Datenpaketen wieder entfernt. Im Netzknoten N6 werden die über die drei Tunnel T1-T3 geführten Datenströme wieder zu einem Datenstrom D2 zusammengeführt, der nach Weiterleitung durch Netzknoten N6 beispielsweise durch Hop-by-Hop-Routing weiter übertragen werden kann.

In dem oben beschriebenen Verfahren muss lediglich Netzknoten N1 "Kenntnis" über die Realisierung des logischen Verbindungspfads durch die drei Tunnel T1-T3 haben und die Datenlast des Datenstroms D1 im Verhältnis 6: 3: 1 verteilen. Netzknoten N6 braucht keine "Kenntnis" über die drei Tunnel T1-T3 zu haben.

Analog zur oben beschriebenen Ausführungsform wird auch erfindungsgemäß ein logischer Verbindungspfad zwischen zwei Endknoten A, B nicht durch einen einzigen Tunnel realisiert, sondern durch ein Aggregat von Tunnel. Falls der Eingangsnetzknoten (Startnetzknoten) erkennt, dass die Bandbreitenanforderung "x" des Verbindungspfads nicht durch einen einzigen Tunnel erfüllt werden kann, versucht der Eingangsknoten nacheinander zwei, drei, vier oder mehr Tunnel mit geringerer Bandbreite aufzusetzen, wobei die Bandbreiten xᵢ entsprechend der Anzahl n an Tunneln gemäß einer gleichmäßigen Verteilung: xᵢ=x/n (n = natürliche Zahl) gewählt werden. Wenn das Einrichten von n Tunnel mit entsprechenden Bandbreiten x₁, ..., xₙ (mit x ≤ xᵢ, ..., xₙ) erfolgreich war, so wird der Datenverkehr entsprechend auf die n Tunnel aufgeteilt.

Eine weitere, nicht zur Erfindung gehörige Möglichkeit der Aufteilung von x auf die xᵢ ist folgende: für x₁ wird die größtmögliche, über einen Tunnel von A nach B verfügbare Bandbreite gewählt; anschließend wird die auf den entsprechenden Links verfügbare Bandbreite um x₁ reduziert; für x₂ wird auf Basis der reduzierten verfügbaren Bandbreiten, die dann noch größtmögliche, über einen Tunnel von A nach B verfügbare Bandbreite gewählt; anschließend wird die auf den entsprechenden Links verfügbare Bandbreite um x₂ reduziert; usw.

Ein wesentlicher Vorteil der letztgenannten Methode liegt darin, dass eine absteigende Folge von Zahlen x₁, x₂, ..., xₙ bestimmt wird, wobei keines der xᵢ von der Wahl von n abhängt. Damit ist keine Neuberechnung aller xᵢ (d. h. aller Tunnel) nötig, wenn n verändert wird und die Pfade werden optimal ausgelastet.

Um zu vermeiden, dass aus einem logischen Verbindungspfad eine sehr große Zahl von Tunnel erstellt wird, sollte die maximale Anzahl N der Tunnel als Parameter konfigurierbar sein. Damit ist auch sichergestellt, dass der Eingangsknoten nur eine beschränkte Zeit (und damit Kapazität) mit der Suche nach einer möglichen Aufteilung des angefragten Pfads in Tunnel verbraucht. Damit ergibt sich auch mit der oben genannten zweiten Möglichkeit ein einfaches Abbruchkriterium für die Bestimmung der Zahlen x₁, x₂,..., xₙ.

Für die Verteilung des Datenverkehrs von A nach B auf die einzelnen Tunnel sollte ein Hash-Algorithmus verwendet werden. Dieser sollte sicherstellen, dass die Lastverteilung auf dem Level von Flows erfolgt und einzelne Datenpakete eines gleichen Flows nicht über verschiedene Tunnel geschickt werden, da es ansonsten wegen unterschiedlicher Laufzeiten zu Paketvertauschungen kommen kann. Dies kann dadurch sichergestellt werden, dass im Hash-Algorithmus nur Daten einbezogen werden, die sich im Rahmen eines Flows nicht ändern (beispielsweise IP-Adressen, Port-Nummern usw.) Für den Fall, dass die xᵢ nicht gleich gewählt wurden, muss ein entsprechendes ungleichmäßiges Verteilen erfolgen.

Sollen Ersatzpfade lediglich von Ende zu Ende aufgesetzt werden, dann beeinflusst die Realisierung eines Pfades mittels mehrerer Tunnel die Ersatzpfadfindung nicht. Der oder die Ersatzpfade von A nach B können auch in Form mehrerer Tunnel realisiert werden. Sollen Ersatzpfadschaltungen jedoch lokal erfolgen (wie beispielsweise bei MPLS Fast ReRoute), dann ist jeder Tunnel einzeln zu berücksichtigen und entsprechende lokale Ersatzwege sind für alle Tunnel zu verwenden.

Bei den herkömmlichen Datenübertragungsverfahren ist es bei starker Netzauslastung unwahrscheinlich, dass das Aufsetzen eines neuen logischen Verbindungspfads mit hoher Bandbreitenanforderung über nur einen physikalischen Datenübertragungspfad möglich ist. Der vorgeschlagene Mechanismus kann die Einrichtung eines entsprechenden Pfads dennoch ermöglichen und reduziert die Anzahl der abgelehnten Reservierungen, indem die Last verteilt wird. Dies führt zu einer besseren Auslastung verfügbarer Netzressourcen, was ein unmittelbares Vergrößern der Linkkapazitäten vermeidet und damit Kosten spart.

## Patentansprüche

1. Verfahren zum Einrichten eines logischen Ende-zu-Ende Verbindungspfads wählbarer erster Bandbreite von einem Startnetzknoten (N1) zu einem Zielnetzknoten (N6) in einem verbindungsorientierten paketvermittelten Kommunikationsnetzwerk, mit den Schritten:
- Bestimmung einer Mehrzahl von physikalischen Ende-zu-Ende Datenübertragungspfaden (T1, T2, T3) vom Startnetzknoten zum Zielnetzknoten mit jeweils verfügbaren zweiten Bandbreiten entsprechend des einzurichtenden logischen Verbindungspfads;
- Auswahl eines oder mehrerer der bestimmten physikalischen Datenübertragungspfade (T1, T2, T3) derart, dass die zweiten Bandbreiten der physikalischen Datenübertragungspfade in Summe wenigstens der ersten Bandbreite des logischen Verbindungspfads entsprechen;
- Aufbauen des wenigstens einen ausgewählten physikalischen Datenübertragungspfads (T1, T2, T3) zum Einrichten des logischen Verbindungspfads;
**dadurch gekennzeichnet, dass**
die erste Bandbreite des logischen Verbindungspfads zur Ermittlung einer dritten Bandbreite durch einen wählbaren Teiler geteilt wird und eine dem Betrag des Teilers entsprechende Anzahl von physikalischen Datenübertragungspfaden unter der Bedingung, dass deren zweite Bandbreite wenigstens der dritten Bandbreite entspricht, gewählt wird.

2. Verfahren nach Anspruch 1, bei welchem eine wählbare maximale Zahl von physikalischen Datenübertragungspfaden (T1, T2, T3) signalisiert wird.

3. Verfahren zum Übertragen von Datenpaketen von einem Startnetzknoten zu einem Zielnetzknoten eines verbindungsorientierten paketvermittelten Kommunikationsnetzwerks, mit den Schritten:
- Einrichten eines logischen Ende-zu-Ende Verbindungspfads vom Startnetzknoten (N1) zum Zielnetzknoten (N6) gemäß dem Verfahren nach Anspruch 1 oder 2;
- Verteilen der zu übertragenden Datenpakete vom Startnetzknoten auf die aufgebauten physikalischen Datenübertragungspfade (T1, T2, T3) entsprechend den zweiten Bandbreiten und Weiterleiten der Datenpakete zum Zielnetzknoten.

4. Verfahren nach Anspruch 3, bei welchem eine Verteilung der Datenpakete auf die aufgebauten physikalischen Datenübertragungspfade (T1, T2, T3) mittels eines Hash-Algorithmus erfolgt.

5. Verbindungsorientiertes paketvermitteltes Kommunikationsnetzwerk mit einer Mehrzahl über jeweilige Datenlinks (L1-L7) miteinander verbundene Netzknoten (N1-N6), in welchem die Netzknoten (N1-N6) zur Durchführung eines Verfahrens nach einem der Ansprüche 1 bis 4 geeignet eingerichtet sind.

6. Maschinenlesbarer Programmcode für einen Netzknoten (N1-N6) eines verbindungsorientierten paketvermittelten Kommunikationsnetzwerks nach Anspruch 5, der Steuerbefehle enthält, die den Netzknoten (N1-N6) zur Durchführung eines Verfahrens nach einem der Ansprüche 1 bis 4 veranlassen.

7. Netzknoten (N1-N6) eines verbindungsorientierten paketvermittelten Kommunikationsnetzwerks, in dem ein maschinenlesbarer Programmcode gemäß Anspruch 6 ausgeführt wird.

8. Speichermedium mit einem darauf gespeicherten maschinenlesbaren Programmcode gemäß Anspruch 6.

## Claims

1. Method for setting up a logical end-to-end connection path of selectable first bandwidth from a source network node (N1) to a destination network node (N6) in a connection-oriented packet-switched communication network, comprising the steps of:
- determining a plurality of physical end-to-end data transmission paths (T1, T2, T3) from the source network node to the destination network node with in each case available second bandwidths in accordance with the logical connection path that is to be set up;
- selecting one or more of the determined physical data transmission paths (T1, T2, T3) such that the second bandwidths of the physical data transmission paths correspond in total at least to the first bandwidth of the logical connection path;
- establishing the at least one selected physical data transmission path (T1, T2, T3) in order to set up the logical connection path;
**characterised in that**
the first bandwidth of the logical connection path is divided by means of a selectable divider in order to determine a third bandwidth and a number of physical data transmission paths corresponding to the result of the divider is selected subject to the condition that their second bandwidth corresponds at least to the third bandwidth.

2. Method according to claim 1, wherein a selectable maximum number of physical data transmission paths (T1, T2, T3) is signalled.

3. Method for transmitting data packets from a source network node to a destination network node of a connection-oriented packet-switched communication network, comprising the steps of:
- setting up a logical end-to-end connection path from the source network node (N1) to the destination network node (N6) in accordance with the method according to claim 1 or 2;
- allocating the data packets to be transmitted from the source network node to the established physical data transmission paths (T1, T2, T3) in accordance with the second bandwidths and forwarding the data packets to the destination network node.

4. Method according to claim 3, wherein the data packets are allocated to the established physical data transmission paths (T1, T2, T3) by means of a hash algorithm.

5. Connection-oriented packet-switched communication network comprising a plurality of network nodes (N1-N6) connected to one another via respective data links (L1-L7), in which communication network the network nodes (N1-N6) are suitably configured for performing a method according to one of claims 1 to 4.

6. Machine-readable program code for a network node (N1-N6) of a connection-oriented packet-switched communication network according to claim 5, which code contains control commands that cause the network node (N1-N6) to perform a method according to one of claims 1 to 4.

7. Network node (N1-N6) of a connection-oriented packet-switched communication network, in which network node a machine-readable program code according to claim 6 is executed.

8. Storage medium on which is stored a machine-readable program code according to claim 6.

## Revendications

1. Procédé d'établissement d'un chemin de liaison logique de bout en bout ayant une première largeur de bande sélectionnable et allant d'un noeud de réseau de départ (N1) à un noeud de réseau de destination (N6) dans un réseau de communication à commutation de paquets orienté connexion, comportant les étapes suivantes :
- détermination d'une pluralité de chemins physiques de transmission de données de bout en bout (T1, T2, T3) allant du noeud de réseau de départ au noeud de réseau de destination avec des deuxièmes largeurs de bande respectivement disponibles conformément au chemin de liaison logique à établir ;
- sélection d'un ou de plusieurs des chemins physiques de transmission de données déterminés (T1, T2, T3) de manière telle que les deuxièmes largeurs de bande des chemins physiques de transmission de données correspondent au total au moins à la première largeur de bande du chemin de liaison logique ;
- établissement de l'au moins un chemin physique de transmission de données sélectionné (T1, T2, T3) pour établir le chemin de liaison logique ;
**caractérisé en ce que**
la première largeur de bande du chemin de liaison logique est divisée par un diviseur sélectionnable pour établir une troisième largeur de bande et un nombre de chemins physiques de transmission de données correspondant à la valeur absolue du diviseur est sélectionné à la condition que leur deuxième largeur de bande corresponde au moins à la troisième largeur de bande.

2. Procédé selon la revendication 1, selon lequel un nombre maximal sélectionnable de chemins physiques de transmission de données (T1, T2, T3) est signalé.

3. Procédé de transmission de paquets de données d'un noeud de réseau de départ vers un noeud de réseau de destination d'un réseau de communication à commutation de paquets orienté connexion, comportant les étapes suivantes :
- établissement d'un chemin de liaison logique de bout en bout allant du noeud de réseau de départ (N1) vers le noeud de réseau de destination (N6) selon le procédé selon la revendication 1 ou 2 ;
- répartition des paquets de données à transmettre du noeud de réseau de départ sur les chemins physiques de transmission de données établis (T1, T2, T3) conformément aux deuxièmes largeurs de bande et retransmission des paquets de données vers le noeud de réseau de destination.

4. Procédé selon la revendication 3, selon lequel une répartition des paquets de données sur les chemins physiques de transmission de données établis (T1, T2, T3) s'effectue au moyen d'un algorithme de hachage.

5. Réseau de communication à commutation de paquets orienté connexion avec une pluralité de noeuds de réseau (N1-N6) interconnectés via des liens de données respectifs (L1-L7), dans lequel les noeuds de réseau (N1-N6) sont configurés de manière appropriée pour exécuter un procédé selon l'une des revendications 1 à 4.

6. Code de programme lisible par machine pour un noeud de réseau (N1-N6) d'un réseau de communication à commutation de paquets orienté connexion selon la revendication 5, lequel code contient des ordres de commande qui font exécuter au noeud de réseau (N1-N6) un procédé selon l'une des revendications 1 à 4.

7. Noeud de réseau (N1-N6) d'un réseau de communication à commutation de paquets orienté connexion, dans lequel est exécuté un code de programme lisible par machine selon la revendication 6.

8. Support de mémoire avec un code de programme lisible par machine selon la revendication 6 stocké dessus.
